(19) Europäisches Patentamt / European Patent Office / Office européen des brevets

(11) **EP 4 333 404 A1**

(12) **EUROPEAN PATENT APPLICATION**
published in accordance with Art. 153(4) EPC

(43) Date of publication:
**06.03.2024 Bulletin 2024/10**

(51) International Patent Classification (IPC):
**H04L 67/02** (2022.01)    **G06Q 30/02** (2023.01)

(21) Application number: **22795341.1**

(52) Cooperative Patent Classification (CPC):
**G06F 13/00; G06Q 30/02; H04L 67/02**

(22) Date of filing: **16.03.2022**

(86) International application number:
**PCT/JP2022/011932**

(87) International publication number:
**WO 2022/230419 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2021   JP 2021073920**

(71) Applicant: **TESNOLOGY Inc.**
**Minato-ku**
**Tokyo 107-0052 (JP)**

(72) Inventor: **KONDO, Katsuhiko**
**Tokyo 107-0052 (JP)**

(74) Representative: **Schröer, Gernot H.**
**Meissner Bolte Patentanwälte**
**Rechtsanwälte Partnerschaft mbB**
**Bankgasse 3**
**90402 Nürnberg (DE)**

(54) **WEB PAGE PROVIDING SERVER**

(57)    A server obtains a partial ID assigned to a partial region selected by a user on a web page including a plurality of partial regions, updates user characteristic information indicating interests of the user on the basis of the partial ID, changes a structure of a web page on the basis of the user characteristic information of the user to which the web page is to be provided, and transmits the web page to a user terminal of the user.

FIG. 7

EP 4 333 404 A1

**Description**

Technical Field

The present invention relates to a technology for providing web pages.

Background Art

The form of transactions of making payments and contracts over the Internet is called "e-commerce (electronic commerce)". In order to make an e-commerce business successful, "Customer Relationship Management (CRM)" is alleged to be important. The CRM is a customer-centered approach to developing a business.

Today, values have been diversified, and the market has been fragmented. It is therefore important to understand customers and provide suitable information for individual customers as appropriate in a timely manner. An information providing server according to Patent Literature 1 obtains attribute information of a user from information registered on the sites of a social networking service (SNS), and selects information to be provided depending on the attribute information of the user.

Related Art List

Patent Literatures

Patent Literature 1: JP 6205700 B

Summary

Technical Problem

Patent Literature 1 teaches classifying customers into a plurality of types on the basis of attribute information such as age, sex, favorite colors, and the like (refer to paragraph [0061] of Patent Literature 1). For customers of the same type, the same information will be provided. The information providing server according to Patent Literature 1 cannot respond flexibly to customers' interests that the customers themselves are not aware of or to changes in their interests.

The present invention has been achieved on the basis of recognition of the aforementioned problems, and a chief object thereof is to provide a technology for appropriately selecting information to be provided to a user on the basis of operation history of the user.

Solution to problem

A server according to an aspect of the present invention includes: a partial ID obtaining unit that obtains a partial ID being an ID assigned to a partial region selected by a user on a web page including a plurality of partial regions; a user characteristics managing unit that updates user characteristic information indicating interests of the user on the basis of the partial ID; a page building unit that changes a structure of a web page on the basis of the user characteristic information of the user to which the web page is to be provided; and a page transmitting unit that transmits the web page to a user terminal of the user.

In a server according to another aspect of the present invention, a plurality of web pages included in a first page group and a plurality of web pages included in a second page group each have a type set in advance.

The server includes: a page selecting unit that selects one of the web pages from the first page group in accordance with selection probabilities set for the respective web pages included in the first page group; and a page transmitting unit that transmits the selected web page to a user terminal of a user.

When a predetermined action is taken on the transmitted web page by the user, the page selecting unit increases the probability of selecting a web page included in the second page group, the web page being of the same type as the transmitted web page.

Advantageous Effects of Invention

The present invention facilitates appropriate selection of information to be provided to a user based on the operation history of the user.

Brief Description of Drawings

FIG. 1 is a hardware configuration diagram of an information providing system.
FIG. 2 is a functional block diagram of a server.
FIG. 3 is a diagram of a first screen of a top page.
FIG. 4 is a data structure table of partial characteristic information.
FIG. 5 is a data structure table of user characteristic information.
FIG. 6 is a flowchart illustrating processes in a case where the top page is accessed in a first embodiment.
FIG. 7 is a diagram of a second screen of the top page.
FIG. 8 is a schematic diagram for explaining a process of updating the user characteristic information on the basis of operation histories of a plurality of web pages.
FIG. 9 is a diagram of a screen of a web page in a second embodiment.
FIG. 10 is a conceptual diagram of user characteristic information in the second embodiment.
FIG. 11 is a flowchart illustrating a process of updating the user characteristic information in the second embodiment.
FIG. 12 is a diagram of a third screen of a top page.
FIG. 13 is a flowchart illustrating processes performed when a top page is accessed in a third embodiment.
FIG. 14 is a schematic diagram for explaining a method of selecting a purchase page in a fourth embodiment.

Description of Embodiments

Embodiments of the present invention will now be described by referring to first to fourth embodiments. When the first to fourth embodiments are not particularly distinguished from each other or are to be collectively referred, each embodiment will be referred to as "the present embodiment".

[First Embodiment]

In the first embodiment, when a user has touched or clicked a partial region set on a web page, user characteristic information indicating the interests of the user is updated on the basis of one or more scores associated with the partial region. The user characteristic information is used for analysis of each user's interests and concerns, and a server changes the structure of a web page on the basis of the user characteristic information.

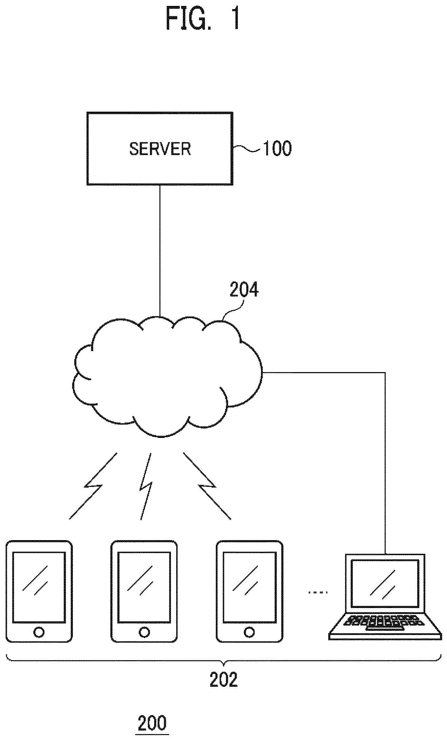

FIG. 1 is a hardware configuration diagram of an information providing system 200.

The information providing system 200 includes a server 100 and a plurality of user terminals 202. The user terminals 202 are communication terminals held by users, and may be laptop PCs, tablet PCs, smartphones, and the like. The user terminals 202 are assumed to be smartphones in the description of the present embodiment will. The server 100 and the user terminals 202 are connected via the Internet 204.

Each user terminal 202 has a web browser. In the description of the present embodiment, the server 100 is assumed to host (provide) an EC (e-commerce) site run by a cosmetics maker X (hereinafter referred to as an "EC operator X"). Each user is identified by a "user ID". Each user performs member registration in the server 100, and the server 100 sets the user ID as a membership number. The server 100 may use the IP (Internet protocol) address (source address) of the user terminal 202 as the user ID. Hereinafter, a user ID is also referred to as a "PID".

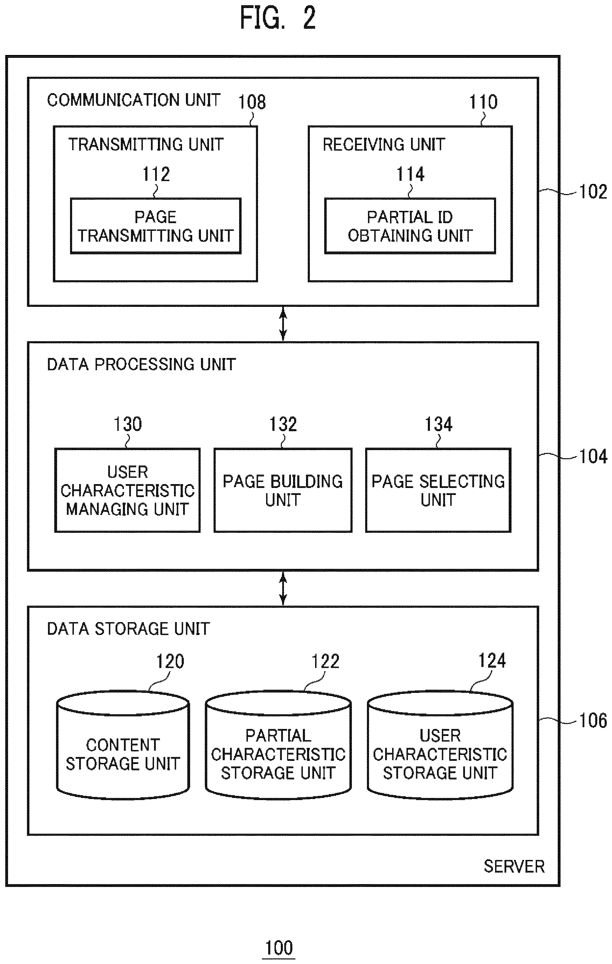

FIG. 2 is a functional block diagram of the server 100.

Respective components of the server 100 are implemented by hardware including arithmetic units such as central processing units (CPUs) and various co-processors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs.

The blocks described below are not in units of hardware but are in units of functions.

The server 100 includes a communication unit 102, a data processing unit 104, and a data storage unit 106.

The communication unit 102 performs processing for communication with the user terminals 202 via the Internet 204. The data storage unit 106 stores various information data. The data processing unit 104 performs various processes on the basis of data obtained by the communication unit 102 and data stored in the data storage unit 106. The data processing unit 104 also functions as an interface of the communication unit 102 and the data storage unit 106.

The communication unit 102 includes a transmitting unit 108 for transmitting various information data to external devices such as the user terminals 202, and a receiving unit 110 for receiving various information data from external devices.

The transmitting unit 108 includes a page transmitting unit 112. The page transmitting unit 112 transmits web pages to the user terminals 202. The receiving unit 110 includes a partial ID obtaining unit 114. The partial ID obtaining unit 114 obtains a "partial ID". The partial ID will be described later.

The data storage unit 106 includes a content storage unit 120, a partial characteristic storage unit 122, and a user characteristic storage unit 124.

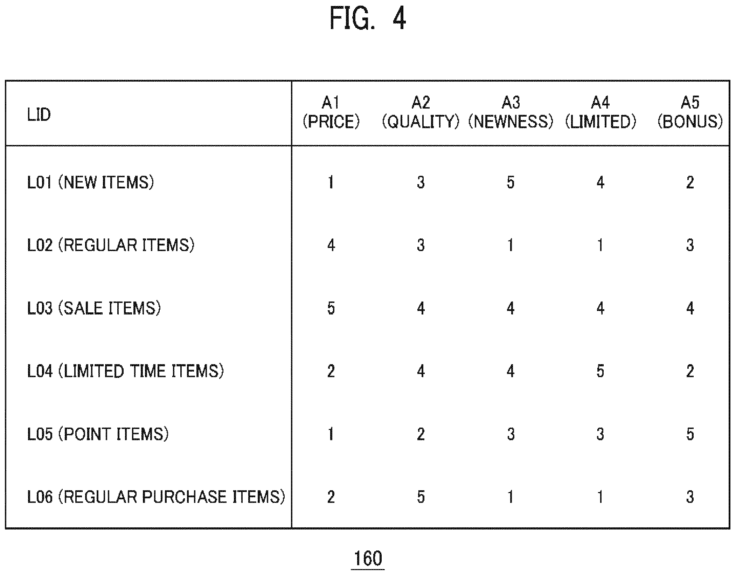

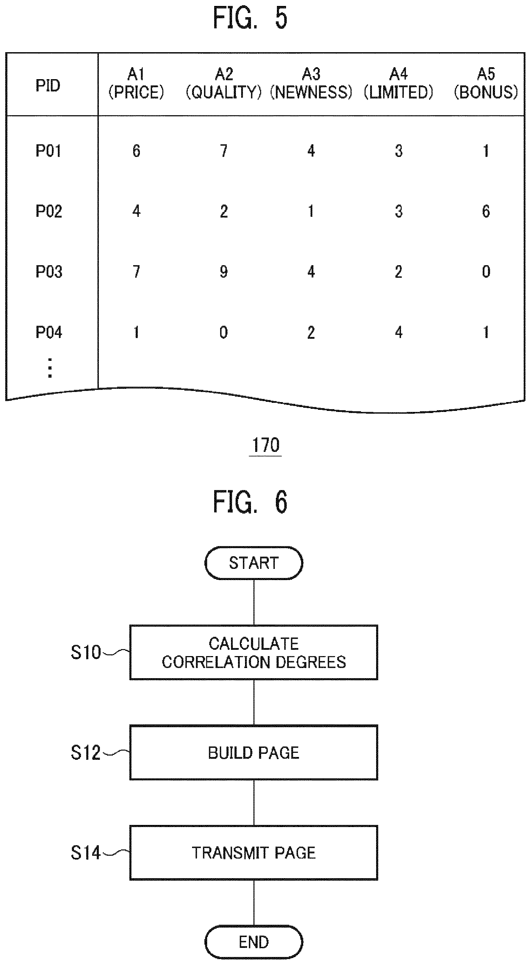

The content storage unit 120 contains contents, such as web pages, to be transmitted to the user terminals 202. The partial characteristic storage unit 122 stores "partial characteristic information". The partial characteristic information will be described later with reference to FIG. 4. The user characteristic storage unit 124 stores "user characteristic information". The user characteristic information will be described later with reference to FIG. 5.

The data processing unit 104 includes a user characteristic managing unit 130, a page building unit 132, and a page selecting unit 134.

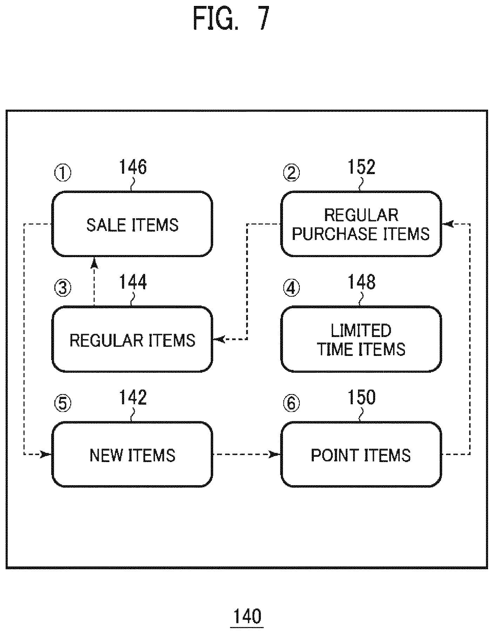

The user characteristic managing unit 130 manages user characteristic information. The page building unit 132 changes the structures of web pages to be provided to the user terminals 202 depending on the user characteristic information. Details of change of the structures will be described later with reference to FIGS. 6 and 7. The page selecting unit 134 selects web pages to be provided to the user terminals 202. Selection of a web page will be described in the fourth embodiment.

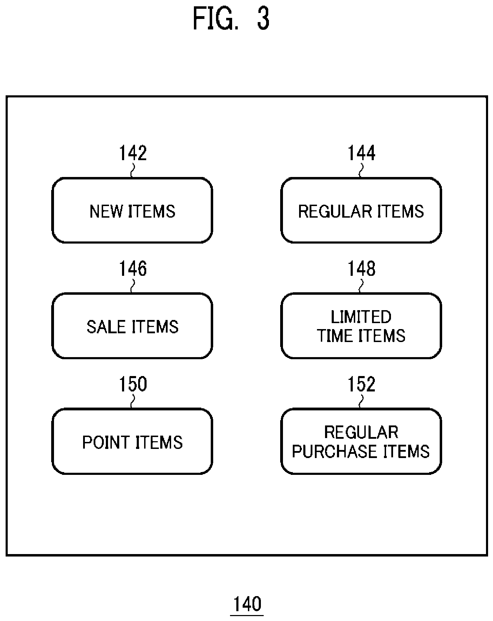

FIG. 3 is a diagram of a first screen of a top page 140.

The server 100 transmits a web page corresponding to the top page 140 to a user terminal 202. The top page 140 is a web page allowing a user to select a category of cosmetics on an EC site. The top page 140 includes a new item button 142, a regular item button 144, a sale item button 146, a limited-time item button 148, a point item button 150, and a regular purchase item button 152.

To the new item button 142, a link (reference information) to a web page (not illustrated) that introduces new items is assigned. A user can cause the web page that introduces new items to be displayed by touching the new item button 142. The regular item button 144 is associated with a web page (not illustrated) that introduces regular items. Similarly, the sale item button 146 is associated with a web page that introduces sale items, the limited-time item button 148 is associated with a web page that introduces limited time items, the point item button 150 is associated with a web page that introduces point items, which are cosmetics with bonus points, and the regular purchase item button 152 is associated with a web page that introduces regular purchase items, which are cosmetics to be regularly delivered.

In the first embodiment, the six buttons set on the top page 140 will be referred to as "partial regions". Each partial region may be a region that is selectable by a user and to which a text or an image is assigned that allows the user to understand what the partial region is for. In addition, a partial region may be a region to which a link (reference information) to another web page is set or a region that causes a certain action when selected, like a purchase button. For example, because the words "new items" are set on the new item button 142, the user can intuitively understand that a web page of new items will be displayed as a result of touching the new item button 142.

A partial ID (hereinafter also referred to as a "LID") is set to each partial region. Each partial ID may be any index that can uniquely identify a partial region, and may be a uniform resource identifier (URI) of a link or a keyword ("new items", for example) itself set to the partial region.

Note that the image illustrated in FIG. 3 may be displayed on an area that is a part of the top page 140 instead of the entire top page 140. In addition, the top page 140 is not limited for selection of a category of cosmetics but the categories thereon may be freely set by the EC operator X.

FIG. 4 is a data structure table of partial characteristic information 160.

The partial characteristic information 160 is stored in the partial characteristic storage unit 122. A partial region with a LID = L01 (hereinafter referred to as a "partial region (L01)") corresponds to the new item button 142. For each partial region, scores of five evaluation items A1 to A5 are set. The evaluation items and the scores are set by the EC operator X.

The evaluation item A1 relates to the "price". The evaluation item (A1: price) on the partial region (L01: new items) has a score of "1 point". Because "new items" associated with the partial region (L01) are considered to have little relation to the "price", the evaluation is low. In contrast, the evaluation item (A1: price) on the partial region (L03: sale items) has a score of "5 points". Because "sale items" are considered to be highly related to the "price", the evaluation is high. The EC operator X sets five scores for each partial region on the basis of the image of the partial region.

Similarly, the evaluation item A2 corresponds to the "quality", the evaluation item A3 corresponds to the "newness", the evaluation item A4 corresponds to the "limited number", and the evaluation item A5 corresponds to "bonus". The partial region (L01: new items) has high scores set for the evaluation item (A3: newness) and the evaluation item (A4: limited number). The EC operator X assumes that users who select the new item button 142 (the partial region (L01)) are likely to be drawn to the newness (novelty) and the limited items (products).

FIG. 5 is a data structure table of user characteristic information 170.

The user characteristic information 170 is stored in the user characteristic storage unit 124. For each user as well, scores of the five evaluation items A1 to A5 are set. Each time a user touches (selects) a partial region, the user characteristic managing unit 130 updates the user characteristic information 170. The evaluation item (A1: price) of a user (P01) has a score of "6 points", which is relatively high. In contrast, the evaluation item (A5: bonus) of the user (P01) has a score of "1 point", which is relatively low. This means that the user (P01) cares about the "price" but is not really interested in the "bonus".

Assume that the user (P01) has touched the new item button 142. In this case, the user characteristic managing unit 130 adds the scores associated with the new item button 142, which corresponds to the partial region (L01), to the scores of the user (P01). When the user (P01) has touched the new item button 142, the score of "1 point" of the partial region (L01) is added to the score of the evaluation item (A1: price) of the user (P01), which is originally "6 points" and is therefore now "7 points" (see FIG. 4).

Hereinafter, a score associated with a user will be referred to as a "user score", and a score associated with a partial region will be referred to as a "partial score". As described above, each time a user touches a partial region, the user characteristic managing unit 130 adds the partial score to the user score. The user characteristic managing unit 130 may add "the partial score $\times$ k (the coefficient k may be any positive real number)" to the user score to update the user characteristic information 170. When k = 0.1, for example, the user score (A1: price) as a result of the user (P01) touching the new item button 142 is 6+1$\times$0.1 = "6.1 points". When the user has touched a partial region, the user characteristic managing unit 130 may recalculate the user score by any function for changing the user score depending on the partial score of the partial region.

User scores indicate how much a user gives weight to the respective evaluation items. The user characteristic information 170 shows which of the evaluation items a user gives weight to. For example, when a user (P12) frequently touches the partial region (L01: new items) or the partial region (L03: sale items), it can be assumed that the user (P12) is very interested in the evaluation item (A3: newness) and the evaluation item (A4: limited number) that are common to the two partial regions.

Each time a user touches a partial region, the corresponding user score increases. Thus, the sum of the user scores shows the number of times the user has accessed the server 100. On the basis of the sum of the user scores, that is, a total value of the user scores (A1: price) to (A5: bonus), the high interest, or what is called loyalty, to cosmetics provided by the EC operator X can be assumed. The user characteristic managing unit 130 may generate and update the user characteristic information 170 on the basis of the operation history in unit period such as from the present to five days ago.

The user characteristic managing unit 130 calculates a correlation coefficient between the user scores and the partial scores, and obtains the calculation result as a "correlation degree". The correlation degree between the user scores {6, 7, 4, 3, 1} of the user (P01) and the partial scores {1, 3, 5, 4, 2} of the partial region (L01: new items) is "-0.13".

For calculation of the correlation degree, firstly, the covariance SXY between the user scores {6, 7, 4, 3, 1} and the partial scores {1, 3, 5, 4, 2}, the standard deviation SX of the user scores, and the standard deviation SY of the partial scores are obtained.

The average MX of the user scores is (6+7+4+3+1)/5 = 4.2.

The average MY of the partial scores is (1+3+5+4+2)/5 = 3.0.

The covariance SXY = {(6-4.2)$\times$(1-3)+(7-4.2)$\times$(3-3)+(4-4.2)$\times$(5-3)+(3-4.2)$\times$(4-3)+(1-4.2)$\times$(2-3)}/5 = -0.4.

SX$\times$SX = {(6-4.2)$\times$(6-4.2)+(7-4.2)$\times$(7-4.2)+(4-4.2)$\times$(4-4.2)+(3-4.2)$\times$(3-4.2)+(1-4.2)$\times$(1-4.2)}/5 = 4.58.

SY$\times$SY = {(1-3)$\times$(1-3)+(3-3)$\times$(3-3)+(5-3)$\times$(5-3)+(4-3)$\times$(4-3)+(2-3)$\times$(2-3)}/5 = 1.30.

The correlation coefficient (correlation degree) = SXY/(SX$\times$SY) = -0.13.

It can therefore be assumed that the user (P01) is not very interested in the partial region (L01: new items). In other words, the user (P01) is assumed not to be the type of person to be interested in new items.

The correlation degree of the user (P01) with the partial region (L02: regular items) is "0.35", the correlation degree with the partial region (L03: sale items) is "0.42", the correlation degree with the partial region (L04: limited time items) is "0.12", the correlation degree with the partial region (L05: point items) is "-0.90", and the correlation degree with the partial region (L06: regular purchase items) is "0.41". What best fits the interests and concerns of the user (P01) is the partial region (L03: sale items), and what worst fits the interests and concerns of the user (P01) is the partial region (L05: point items). For the user (P01), active recommendation on "sale items" rather than "point items" is more likely to lead to purchase of items.

FIG. 6 is a flowchart illustrating processes in a case where the top page 140 is accessed in the first embodiment.

Assume here that the user (P01) has accessed the server 100 to display the top page 140 on the user terminal 202. Upon an access request, the user characteristic managing unit 130 identifies the user ID = P01, and calculates the correlation degrees between the partial scores of the six partial regions on the top page 140 and the user scores of the user (P01) (S10). As described above, six correlation degrees are calculated for the six partial regions on the top page 140.

The page building unit 132 builds the top page 140 depending on the correlation degrees (S12). Specifically, the partial region (L03: sale items) with the highest correlation degree is displayed at the top on the top page 140. The top page 140 resulting from the change in the structure will be described later with reference to FIG. 7. The page transmitting unit 112 transmits the resulting top page 140 to the user terminal 202 (S14).

When the user (P01) has selected any one of the partial regions on the top page 140, the page transmitting unit 112 transmits a web page associated with the partial region. For example, when the user (P01) has touched the regular item button 144 (regular items), the page transmitting unit 112 transmits a web page relating to regular items to the user terminal 202. The partial ID obtaining unit 114 obtains the partial ID of the selected partial region (L02: regular items) from the user terminal 202. The user characteristic managing unit 130 updates the user scores of the user (P01) on the basis of the partial scores {4, 3, 1, 1, 3} of the partial region (L02: regular items).

When the user (P01) has further selected any one partial region on the web page relating to the regular items, the user characteristic managing unit 130 further updates the user scores of the user (P01) on the basis of the partial scores of the selected partial region. In this manner, each time a user touches a partial region on a web page, the user characteristic managing unit 130 updates the user characteristic information 170.

FIG. 7 is a diagram of a second screen of the top page 140.

Assume that the correlation degree of the partial region (L03: sale items) is the highest value "0.42" when the correlation degrees between the user (P01) and the six partial regions are calculated as described above. In this case, the page building unit 132 sets the sale item button 146, which corresponds to the partial region (L03), at an upper-left position that is the most noticeable to the user (P01). The priority levels on the top page 140 are assumed to be set in the following order: upper left (first), upper right (second), middle left (third), middle right (fourth), lower left (fifth), and lower right (sixth). Hereinafter, display of information that is considered important for a user in an easily visible manner will be referred to as "preferential display".

In the example described above, because the partial region with the second highest correlation degree ("0.41") is the partial region (L06: regular purchase items), the regular purchase item button 152 corresponding to the partial region (L06) is set at the upper right position with the second priority level. The regular item button 144 corresponding to the partial region (L02: regular items) with the third highest correlation degree is set at the middle left position with the third priority level. The page building unit 132 sets the arrangement of the buttons on the top page 140 for each user on the basis of the correlation degrees of the individual partial regions. The preferential display allows the user (P01) to first visually recognize information relating to the "sale items" in which the user (P01) is likely to be interested. The user (P01) can easily find topics in which the user (P01) is interested, and the EC operator X can effectively provide appropriate information to the user (P01).

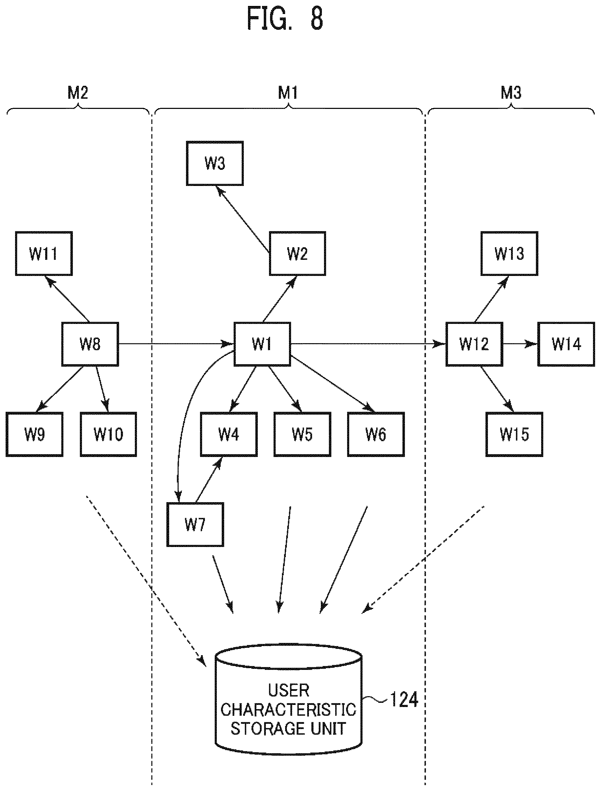

FIG. 8 is a schematic diagram for explaining a process of updating the user characteristic information 170 on the basis of operation histories of a plurality of web pages.

The server 100 may update the user characteristic information 170 by referring to the histories of the user's operation on not only web pages W1 to W7 provided by the EC operator X (the present company that operates the server 100) but also on web pages W8 to W11, W12 to W15 provided by other companies.

In the description, it is assumed that a server M1 (the present company) provides the web pages W1 to W7, a server M2 (another company) provides the web pages W8 to W11, and a server M3 (another company) provides the web pages W12 to W15. The server M1 as the server 100 of the EC operator X manages the user characteristic information 170. When a partial region is selected on any of the web pages provided by the server M1, the user characteristic managing unit 130 updates the user characteristic information 170 as described above.

The web page W8 provided by the server M2 has a link to the web page W1. The operator (another company) of the server M2 sets partial IDs (LIDs) to the respective partial regions included in the web pages W8 to W11 in advance. The operator of the server M2 makes, in advance, a contract with the EC operator X to transmit the partial ID and the user ID to the server M1 when a partial region is selected.

When the user (P01) has touched a partial region included in the web page W9 (server M2), the server M2 transmits the partial ID of the selected partial region and the user ID = P01 to the server M1. The partial characteristic storage unit 122 of the server M1 also has partial characteristic information 160 on the partial regions managed by the server M2. The user characteristic managing unit 130 of the server M1 updates the user characteristic information 170 on the basis of the partial scores of the partial region selected on the web page W9.

A link from the web page W1 is set to the web page W12 provided by the server M3. The operator (another company) of the server M3 also sets partial IDs to the respective partial regions included in the web pages W12 to W15. The operator of the server M3 also makes, in advance a contract with the EC operator X to transmit the partial ID and the user ID to the server M1. When the user (P01) has touched a partial region on a web page managed by the server M3 as well, the server M3 transmits the user ID and the partial ID to the server M1, and the server M1 updates the user characteristic information 170.

The server M1 can also obtain operation histories of the user (P01) from web pages that are not managed by the server M1 by receiving partial IDs associated with the operations of the user (P01) from the other servers M2 and M3. Such a control method allows plenty of operation histories of the user (P01) to be obtained, which can further enrich the user characteristic information 170.

The server M2 (another company) may manage the partial characteristic information 160 by itself. For example, when the user (P01) has touched a partial region (LX) on the web page W8, the server M2 may transmit the partial scores of the partial region (LX) together with the user ID to the server M1. The user characteristic managing unit 130 of the server M1 may update the user characteristic information 170 on the basis of the partial scores.

[Second Embodiment]

In the second embodiment, when a user has touched a partial region on a web page, user characteristic information indicating the interests of the user is updated on the basis of terms associated with the partial region. The user characteristic information in the second embodiment is formed as a map showing the importance degrees and the connection degrees of terms. The server changes the structure of web pages for each user on the basis of the user characteristic information.

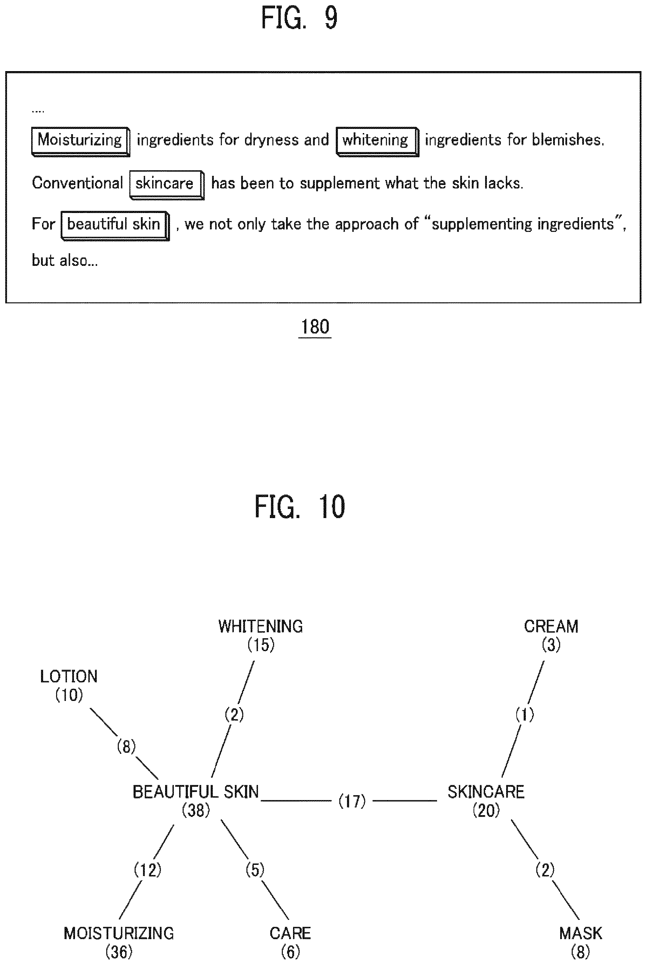

FIG. 9 is a diagram of a screen of a web page 180 in the second embodiment.

The web page 180 in FIG. 9 includes a text of item description. Floating regions 182 are set on some terms included in the descriptive text. The terms, such as "moisturizing" and "whitening", associated with the floating regions 182 are hereinafter called "keywords". The floating regions 182 have a button-like shape with a three-dimensional effect, which tempts the user to "touch" the floating regions 182. In the second embodiment, the floating regions 182 correspond to partial regions. Each partial region in the second embodiment may also be a region that is selectable by a user and which allows the user to understand what the partial region is for. Like the first embodiment, a link to another web page may be set to each floating region 182 in the second embodiment.

FIG. 10 is a conceptual diagram of user characteristic information 190 in the second embodiment.

The user characteristic information 190 in the second embodiment is defined by the "importance degrees" and the "connection degrees" of various keywords. The user characteristic information 190 differs for each user. FIG. 10 shows the user characteristic information 190 of a user (P11) .

The "importance degree" is set for each keyword. When the user (P11) has touched a floating region 182, the user characteristic managing unit 130 adds to the importance degree of the keyword associated with the floating region 182. When the user (P11) has touched a floating region 182 (beautiful skin), the user characteristic managing unit 130 adds 1 to the importance degree of the keyword "beautiful skin". In FIG. 10, the importance degree of "beautiful skin" is "38", the importance degree of "moisturizing" is "36", and the importance degree of "care" is "6". These data show that the user (P11) is likely to react to the keywords "beautiful skin" and "moisturizing" but does not react much to the keyword "care".

A "connection degree" is set between keywords. Assume that the user (P11) has touched a floating region 182 (beautiful skin) on the web page 180, and then touched "moisturizing" on the same web page 180. In this case, the user characteristic managing unit 130 adds 1 to the connection degree between the keyword "beautiful skin" and the keyword "moisturizing". In FIG. 10, the connection degree between "beautiful skin" and "moisturizing" is "12", and the connection degree between "beautiful skin" and "whitening" is "2". These data show that the user (P11) finds a strong association between "beautiful skin" and "moisturizing" but does not find much association between "beautiful skin" and "whitening".

The importance degrees and the connection degrees of various keywords enables a quantitative grasp of keywords that draw each user's interest or concern and combinations of keywords that seem to each user to be related to each other.

In a manner similar to the first embodiment, the page building unit 132 builds web pages on the basis of the user characteristic information 190. In this process, the page building unit 132 causes a partial region associated with "beautiful skin" with a high importance degree to be preferentially displayed. For example, on a web page displaying a list of a plurality of cosmetics, the page building unit 132 may preferentially display cosmetics tagged with "beautiful skin" at the top of the list. In the second embodiment, the web page 180 functions as a page for finding out the interests and concerns of a user in addition to providing explanation of items.

The page building unit 132 may display cosmetics tagged with "moisturizing" in addition to "beautiful skin" with higher priority than cosmetics tagged with "beautiful skin" only. Because the user (P11) is not only interested in "beautiful skin" but also considers "beautiful skin" and "moisturizing" as being associated with each other, the preferential display of cosmetics associated with both of "beautiful skin" and "moisturizing" allows provision of more useful information to the user (P11).

More specifically, when there is a keyword having a connection degree with "beautiful skin" being equal to or larger than a threshold T1 and an importance degree being equal to or larger than a threshold T2 among keywords connecting with "beautiful skin", the page building unit 132 may preferentially display a partial region associated with not only "beautiful skin" but also this keyword. In a case where the threshold T1 is 1/3 the importance degree of "beautiful skin" and the threshold T2 is 1/2 the importance degree of "beautiful skin", the threshold T1 is "12" and the threshold T2 is "19" (see FIG. 10). In the user characteristic information 190 illustrated in FIG. 10, "moisturizing" is the only keyword with the connection degree and the importance degree being equal to or higher than the thresholds T1 and T2, respectively. In this case, the page building unit 132 displays associated with the two keywords "beautiful skin" and "moisturizing" with higher priority than a partial region associated with "beautiful skin" only.

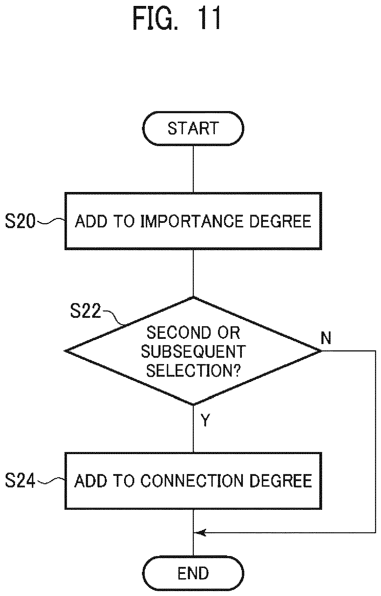

FIG. 11 is a flowchart illustrating a process of updating the user characteristic information 190 in the second embodiment.

When a user has touched any one of floating regions 182 on the web page 180, the process illustrated in FIG. 11 is performed. When the user (P11) has touched a floating region 182 (beautiful skin), the user characteristic managing unit 130 increases the importance degree of the keyword "beautiful skin" (S20). If the touch is the first touch (N in S22), the process is terminated. If the touch is the second or subsequent touch on the web page 180 (Y in S22), the user characteristic managing unit 130 increases the connection degree between the previously selected keyword and the currently selected keyword (S24).

For example, when the user (P11) has touched the keyword "beautiful skin" and has thereafter touched a floating regions 182 (moisturizing), the page building unit 132 adds to the importance degree of the keyword "moisturizing" and also adds to the connection degree between "moisturizing" and "beautiful skin".

Each time a floating region 182 is touched, the page building unit 132 adds to the importance degree and the connection degree. The page building unit 132 may update the user characteristic information 190 on the basis of the operation history in a unit period such as one week, and not reflect the operation history older than one week in the importance degree and the connection degree.

[Third Embodiment]

In the third embodiment, limitation information, such as information on cosmetics in a limited quantity (hereinafter referred to as "limited cosmetics") is provided to some users only. The cosmetics have a plurality of scores (hereinafter referred to as "product scores") set in advance in a manner similar to the first embodiment. The page building unit 132 selects users to whom the information on the limited cosmetics is to be provided on the basis of the product scores and the user scores.

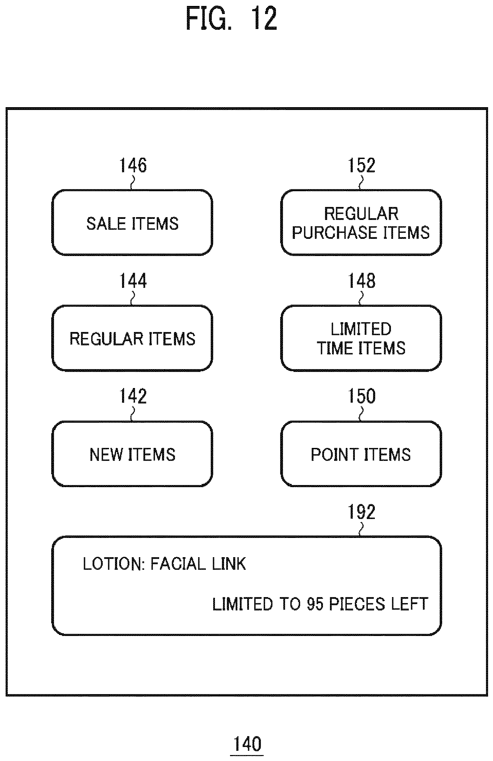

FIG. 12 is a diagram of a third screen of the top page 140.

In the third embodiment, assume a situation in which limited cosmetics "Facial Link" limited to 100 pieces are sold only to some users. The way of selling the limited cosmetics may be on a first-come-first served basis or selecting users to sell the items (products) to by lot. Such selling methods, however, may result in that users who are inappropriate for the limited cosmetics get the limited cosmetics. Some sellers may want to select users who are likely to use the limited cosmetics regularly and sell the limited cosmetics to such users. In a case of selling the limited cosmetics to users providing feedback as well, it is preferred to select users who are likely to post favorable and constructive comments on the cosmetics on social media and sell the cosmetics to such users.

In the third embodiment, scores of the evaluation items A1 to A5 are set for the limited cosmetics in a manner similar to the first embodiment. For example, the EC operator X sets the product scores of the limited cosmetics "Facial Link" to {5, 3, 3, 1, 2}. The page building unit 132 calculates, as a correlation degree, a correlation coefficient between the user scores and the product scores, and displays a limitation information button 192 on the top page 140 only for users with the correlation degree being equal to or larger than a predetermined threshold V.

For example, assume that the threshold V is "0.5". When user scores of the user (P01) are {6, 7, 4, 3, 1} (see FIG. 5), the correlation degree between the user (P01) and the limited cosmetics "Facial Link" is "0.65", which is larger than the threshold V. When the user (P01) has accessed the top page 140, the page building unit 132 adds the limitation information button 192 on the top page 140. If the user (P01) touches the limitation information button 192, a web page (not illustrated) relating to details of the limited cosmetics "Facial Link" is displayed. Hereinafter, such a web page that is presented to specific users only will be referred to as a "limited page". While a plurality of product scores are set for the limited cosmetics in the description of the third embodiment, the product scores may alternatively be set for the limited page introducing the limited cosmetics.

In contrast, when the user scores of a user (P02) are {4, 2, 1, 3, 6} (see FIG. 5), the correlation degree between the user (P01) and the limited cosmetics "Facial Link" is "-0.06", which is smaller than the threshold V. When the user (P02) has accessed the top page 140, the page building unit 132 does not add the limitation information button 192 on the top page 140. According to such a control method, the user (P01) that is likely to be interested in the limited cosmetics "Facial Link" can be efficiently selected. The user characteristic managing unit 130 may update the user characteristic information 170 as appropriate in a manner similar to that in the first embodiment.

On the limitation information button 192, the remaining number of pieces of the limited cosmetics "Facial Link" is also displayed in such a text as "limited to 95 pieces left". This makes the user (P01) recognize that there are cosmetics that suit his/her taste and that the cosmetics are limited items, which further motivates purchase of the limited cosmetics.

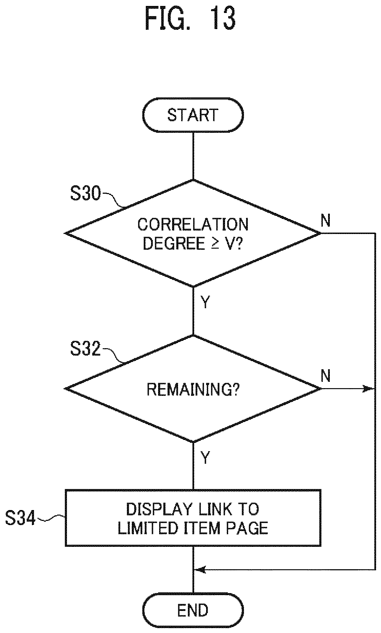

FIG. 13 is a flowchart illustrating processes performed when the top page 140 is accessed in the third embodiment.

When a user has requested access to the top page 140, the user characteristic managing unit 130 identifies the user ID and places the partial regions (buttons) on the top page 140 in a manner similar to the first embodiment. Subsequently, the user characteristic managing unit 130 calculates the correlation degree between the user scores and the product scores. When the correlation degree is smaller than the threshold V (N in S30), subsequent processes are not performed. When the correlation degree is equal to or larger than the threshold V (Y in S30), the user characteristic managing unit 130 checks the remaining number of pieces of limited cosmetics (S32). The transmitting unit 108 of the server 100 may check with an external inventory control database (not illustrated) regarding the remaining number of pieces of limited cosmetics and inform the user characteristic managing unit 130 of the number. If there is no remaining limited cosmetics (N in S32), the following process is not performed.

If there is a piece of limited cosmetics left (Y in S32), the page building unit 132 adds the limitation information button 192 onto the top page (S34) . The page building unit 132 also displays the remaining number of pieces on the limitation information button 192 (see FIG. 12).

[Fourth Embodiment]

In the fourth embodiment, a plurality of kinds of webpages (hereinafter referred to as "purchase pages") for purchase of one item. The server 100 selects, from the plurality of kinds of purchase pages, a purchase page on which the user is likely to purchase the item on the basis of the operation history of the user.

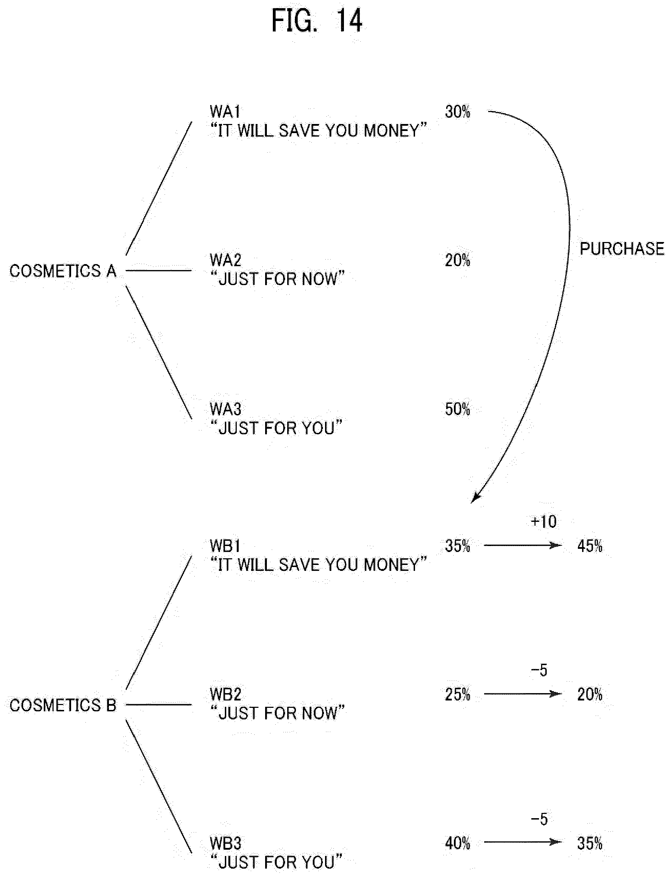

FIG. 14 is a schematic diagram for explaining a method of selecting a purchase page in the fourth embodiment.

Assume herein that two kinds of cosmetics A and B are provided. Three purchase pages WA1, WA2, and WA3 (hereinafter also referred to as "group A") are provided as purchase pages for the cosmetics A. The purchase pages of the group A are the same with each other in having an interface for purchase of the cosmetics A. The purchase pages WA1, WA2, and WA3 differ from each other in the descriptive text or the promotional text of the cosmetics A. Assume herein that the purchase page WA1 uses a phrase "it will save you money", the purchase page WA2 uses a phrase "just for now", and the purchase page WA3 uses a phrase "just for you" to promote the cosmetics A. Some promotional texts are likely to motivate some people to purchase an item (product), and some promotional texts are less likely to motivate some people to purchase an item (product). For example, the user (P01) may be motivated to buy by the phrase "it will save you money" on the purchase page WA1, and another user (P02) may be more motivated to buy by the phrase "just for now" on the purchase page WA2.

Three purchase pages WB1, WB2, and WB3 (hereinafter also referred to as "group B") are also provided as purchase pages for the cosmetics B. Assume that the purchase page WB1 uses the phrase "it will save you money", the purchase page WB2 uses the phrase "just for now", and the purchase page WB3 uses the phrase "just for you" to promote the cosmetics B. Thus, the purchase pages WA1 and WB1 are of the same type. Similarly, the purchase pages WA2 and WB2 are of the same type, and the purchase pages WA3 and WB3 are of the same type.

The probability of selecting each purchase page is set for each user. For the user (P01), the probabilities of selecting the respective purchase pages WA1, WA2, and WA3 are set in advance. In the fourth embodiment, assume that, for the user (P01), the probability of selecting the purchase page WA1 is set to 30 [%], the probability of selecting the purchase page WA2 is set to 20 [%], and the probability of selecting the purchase page WA3 is set to 50 [%].

Similarly, the probabilities of selecting the respective purchase pages WB1, WB2, and WB3 are also set in advance. Assume that, for the user (P01), the probability of selecting the purchase page WB1 is 35 [%], the probability of selecting the purchase page WB2 is 25 [%], and the probability of selecting the purchase page WB3 is 40 [%].

When the user (P01) accesses a purchase page in the group A, the page selecting unit 134 selects one of the purchase pages WA1, WA2, and WA3 in accordance with the selection probabilities. Specifically, the page selecting unit 134 generates a random number within a range of 1 to 100, and selects the purchase page WA1 if the random number value is 1 to 30, selects the purchase page WA2 if the random number value is 31 to 50, or selects the purchase page WA3 if the random number value is 51 to 100. The page transmitting unit 112 transmits the selected purchase page to the user terminal 202(P01).

Assume herein that the purchase page WA1 has been transmitted to the user (P01) and that the user (P01) has purchased the cosmetics A on the purchase page WA1. This result shows that the promotional phrase "it will save you money" on the purchase page WA1 has worked effectively to the user (P01) or at least has not worked adversely.

On the basis of the actual result that the user (P01) has purchased the cosmetics A on the purchase page WA1, the page selecting unit 134 increases the probability of selecting the purchase page WB1 of the same type for the cosmetics B by 10 [%]. In addition, the page selecting unit 134 decreases each of the probabilities of selecting the purchase pages WB2 and WB3 by 5 [%] accordingly. As a result, for the user (P01), the probability of selecting the purchase page WB1 is increased to 45 [%], the probability of selecting the purchase page WB2 is decreased to 20 [%], and the probability of selecting the purchase page WB3 is decreased to 35 [%].

In this manner, when the user (P01) has purchased the cosmetics A on the purchase page WA1, the probability of selecting the purchase page WB1 of the same type for the cosmetics B increases. Because the user (P01) can be considered as being likely to respond to the promotional phrase "it will save you money", the probability of selecting the purchase page WB1 of the same type, which can increase the possibility that the user (P01) will purchase the cosmetics B.

When there are other cosmetics C and D, the selection probabilities are similarly adjusted. Furthermore, because a user may purchase the cosmetics A twice or more times, the page selecting unit 134 may also increase the probability of selecting the purchase page WA1 when the user (P01) has purchased the cosmetics A on the purchase page WA1.

When the user (P01) has purchased the cosmetics B on the purchase page WB2 ("just for now"), the page selecting unit 134 increases the probability of selecting the purchase page WA2.

[Summary]

A method for providing information by the information providing system 200 has been described above with reference to the embodiments.

According to the first and second embodiments, the server 100 can select information that is important for a user on the basis of the operation history of the user, and preferentially display the selected information. This allows the user, who accesses web pages such as the top page 140, to easily find information that match his/her interests. In addition, the EC operator X can also enhance revenue opportunities by changing the method of providing information among a variety of information depending on users.

In the first and second embodiments, each user's concerns, interests, and tastes can be found out on the basis of the user's history of selecting of partial regions. Because many partial regions are frequently touched, information on users can be easily gathered. Furthermore, this not only facilitates information gathering but also facilitates protection of users' privacy. For example, the user characteristic managing unit 130 need not save information on which partial region a user selected, but can manage the user characteristic information 170 on the basis of only the partial scores of a partial region selected by a user. Furthermore, the loyalty of a user to a website or the time during which a user stays on a website can also be estimated on the basis of the number of touches on partial regions. The server 100 can obtain plenty of information relating to the concerns and interests of users while maintaining user privacy through web surfing.

The EC operator X may obtain the operation histories of users not only from their website but also from websites of other companies. Unexpected information relating to a user may be drawn from the operation history on websites of other companies. For example, even when a user (P01) appeared not to give much weight to the quality (A2) on the website of the EC operator X, the user (P01) may have shown a strong interest on the quality on the website of another company. The EC operator X can understand a user in more depth by gathering the operation histories on a large number of partial regions on a large number of web pages.

In the third embodiment, the information of an item is provided only to some users instead of all users, which can bring "a sense of being selected" to the users by "receiving presentation of the suitable item for him/her". An affinity between product scores indicating item characteristics and user scores indicating user characteristics is quantified as a correlation degree, which enable provision of item information to selected users that are likely to like the item or that are likely to use the item carefully. In addition, provision of limited items to such users is likely to cause word of mouth on social media or the like even with a small number of items. This brings about the users' expectation that they may be provided with limitation information as a result of conveying their interests and concerns by accessing the web page provided by the server 100. As a result of sorting out a huge number of contents by the server 100 depending on each user's taste, a website that is recognizable and beneficial for the user can be achieved.

In the fourth embodiment, efficient methods for describing items, promoting items, and the like can be found out for each user on the basis of a past record of sales of the cosmetics A. Using a past record of sales of an item in sales methods of other items can effectively increase the motivation for users to purchase the items.

The present invention is not limited to the embodiments described above and modifications thereof, and any component thereof can be modified and embodied without departing from the scope of the invention. Components described in the embodiments and modifications can be combined as appropriate to form various other embodiments. Some components may be omitted from the components presented in the embodiments and modifications.

[Modifications]

In the description of the web page 180 (see FIG. 9), the floating regions 182 are displayed in such a manner that keywords stand out. Alternatively, a partial region may be set as a region in which keywords are underlined or different colors are used for keywords.

In addition to when a user has touched or clicked a partial region such as a floating region 182, the user characteristic managing unit 130 may update the user characteristic information 170 when the cursor has stayed on a partial region for a predetermined time or longer by deeming that the partial region is practically "selected". When the cursor stays on a partial region, the user may hesitate over whether to select the partial region. In other words, the user may be interested in the partial region.

While a text such as a keyword is displayed on each partial region in the description of the present embodiments, a partial region may be associated with an image instead of a text.

In the description of the first embodiment, a plurality of evaluation items are set for one partial region. In a modification, only one evaluation item may be set for one partial region.

In the description of the present embodiments, information important to a user is displayed as "preferential display" at the top or at the left on a web page. Alternatively, important information may be displayed with a size larger than other information. The color of important information may be changed or a mark may be placed on important information, so as to enhance the visibility of the important information. Thus, preferential display may be made by any display method that makes specific information more visible than other information by displaying the specific information at different positions or in different states from those of other information.

The evaluation items need not be fixed. Evaluation items A1, A2, and A3 may be set for a partial region L1, and evaluation items A2, A3, A4, and A5 may be set for another partial region L2. In this case, the scores of the evaluation items A4 and A5 for the partial region L1 may be set to the average of the scores of the evaluation items A1, A2, and A3 for convenience sake. For example, when the scores of the evaluation items A1, A2, and A3 for the partial region L1 are {4, 6, 2}, the average thereof is "4", and the scores of the evaluation items A4 and A5 for the partial region L1 may therefore be set to {4, 4} for convenience sake. According to such a control method, even in a case where many evaluation items are provided, the scores of all the evaluation items for each partial region need not be set, which reduces the workload on the EC operator X.

In the description above, when a partial region has been selected, the user characteristic managing unit 130 updates the user characteristic information 170 by adding the partial scores associated with the partial region to the user scores. As described above, the user characteristic managing unit 130 may update the user characteristic information 170 by adding "the partial scores $\times$ k (the coefficient k may be any positive real number)" to the user scores. When the user (P01) has selected the sale item button 146, which is preferentially displayed, on the top page 140 in FIG. 7, "the partial scores $\times$ k1" of the sale item button 146 may be added to the user scores.

When the user (P01) has selected the point item button 150, which is displayed in a subordinate manner, on the top page 140 in FIG. 7, the user characteristic managing unit 130 may add "the partial scores $\times$ k2" to the user scores. The phrase "displayed in a subordinate manner" used herein means to be displayed at a position with a relatively low priority, such as a priority lower than the top four positions, on the top page 140 in FIG. 7. Note that $k2 > k1$. This is because the user who dares to select the point item button 150, which is displayed in a subordinate manner, can be considered as being likely to be strongly interested in the point item button 150. Use of k2 that is larger than k1 allows the fact that the user has dared to select the partial region that is displayed in a subordinate manner to be greatly reflected in the user scores.

In the description of the first embodiment, five scores are set for each partial region, and the user characteristic managing unit 130 updates the user characteristic information 170 on the basis of the five scores. In a modification, a partial region itself may be an evaluation item. For example, an evaluation item (new items) and a score of 0.5 points are set for the partial region (L01: new items). When the user (P01) has selected the partial region (L01: new items), the user characteristic managing unit 130 adds 0.5 points to the evaluation item (new items) of the user (P01). The user characteristic information 170 may be updated depending on the number of selected partial regions in this manner.

A plurality of evaluation items and scores may be set for each floating region 182 (partial region) as presented in the second embodiment. For example, one or more partial scores are set for the floating region 182 (moisturizing) in FIG. 9. When the user (P01) has selected the floating region 182 (moisturizing), the user characteristic managing unit 130 may update the user scores of the user (P01) on the basis of the partial scores associated with the floating region 182 (moisturizing).

Assume that the evaluation item A1 of the keyword "beautiful skin" has a score of 10 points and that the evaluation item A1 of the keyword "moisturizing" has a score of 5 points. When the user has selected the keyword "beautiful skin" and have then selected the keyword "moisturizing", the user characteristic managing unit 130 may calculate a value to be added for the evaluation item A1 to be "(10 points + 5 points) × k3", and update the user score of the evaluation item A1 on the basis of the value to be added. k3 may be any positive real number. When k3 = the connection degree, the connection degree between "beautiful skin" and "moisturizing" can also be reflected in the user score.

Assume that the keyword "beautiful skin" has a high score of an evaluation item "internal health". Assume that a keyword "vegetarian diet" also has a high score of the evaluation item "internal health". When a user (P22) has frequently selected the floating region 182 (beautiful skin) and the floating region 182 (vegetarian diet), the user (P22) can be considered as being "internal health"-conscious. Assume that a keyword "keep gut healthy" has a high score of the evaluation item "internal health". The user (P22) need not have knowledge about "keep gut healthy". When providing a web page to the user (P22), the page building unit 132 may preferentially display a button on which a link to a web page relating to "keep gut healthy" is set. The page building unit 132 can select information on "keep gut healthy" that the user (P22), who is interested in internal health, is not aware of but is likely to get interested in, and provide the information to the user (P22).

When a user has conducted a web search by the keyword "beautiful skin", the page building unit 132 may preferentially display a link to a web page that includes, as keywords, not only "beautiful skin" but also "moisturizing", which has a high connection degree with "beautiful skin".

Scores may be set for each item (product) as in the third embodiment instead of being set for each partial region. Alternatively, scores may be set for each service or each category of items (products) and services instead of being set for each item. When a user has selected a category "natural cosmetics" on a web page, the user characteristic managing unit 130 may update the user scores on the basis of one or more scores associated with the category "natural cosmetics".

The user characteristic information 170, 190 may be shared with companies other than the EC operator X with the approval from users. A data managing company Y that manages the user characteristic information 170 may be assumed. A server 100 operated by the data managing company Y obtains a partial ID, or a score associated with a partial region, together with a user ID from each web page, and updates the user characteristic information 170. In addition, the data managing company may provide the user characteristic information 170 to other companies.

In the description of the second embodiment, when a floating region 182 associated with a first keyword K1 and a floating region 182 associated with a second keyword K2 are successively selected on one web page 180, the connection degree between the keyword K1 and the keyword K2 is increased. In a modification, when a floating region 182 associated with a keyword K2 is selected within a predetermined time, such as within five seconds, after a floating region 182 associated with a keyword K1 is selected, the page building unit 132 may add the connection degree between the keyword K1 and the keyword K2. In this case, the keyword K1 and the keyword K2 may be terms present on different web pages from each other.

The user characteristic managing unit 130 may set limits to addition of the importance degrees and the connection degrees in the user characteristic information 190. For example, the user characteristic managing unit 130 may reset the importance degrees and the connection degrees in the user characteristic information 190 at predetermined timing such as at the end of every month. Alternatively, the user characteristic managing unit 130 may halve the existing importance degrees and connection degrees every month. Assume that the importance degree of "beautiful skin" for the user (P01) as of April 30, 2021 was "418". The user characteristic managing unit 130 may halve the importance degree on May 1, thereby resetting the importance degree of "beautiful skin" for the user (P01) to "209". Such a control method facilitates control of the increase paces of the importance degrees and the connection degrees in the user characteristic information 190.

In the description of the third embodiment, the users to which limited cosmetics whose number is limited are introduced are selected on the basis of the user characteristic information 170. Items (products) or services introduced to users need not be limited items. The page building unit 132 can sort out limitation information to be provided to each user on the basis of the user characteristic information 170. By selecting limitation information that is suitable for each user from a huge number of contents, the page building unit 132 can behave as a concierge for the user. The page building unit 132 can provide information that the user is likely to like, and avoid providing information that the user may not like.

A user's latest interests can be found out from the operation history of the user. For example, assume that there are information C1 that has been provided to the user (P01) and information C2 that has not been provided to the user (P01). When the operation history on the information C1 shows that the interests of the user (P01) have changed, the user (P01) may get interested in the information C2. The page building unit 132 may provide the information C2 to the user (P01) after recognizing that the interests of the user have changed. Because the server 100 can recognize a change in the interests of a user on the basis of the operation history of the user, the server 100 can appropriately provide the information C2 to the user (P01) at a timing when the user (P01) may get interested in the information C2 without wastefully continuing to save the information C2 that has remained unused.

In the third embodiment, the page building unit 132 may display the limitation information button 192 only for users with high loyalty. The page building unit 132 may refer to the user characteristic information 170, display the limitation information button 192 only for users with total points of user scores being equal to or larger than a threshold R, and provide limitation information to such users only. According to such a control method, limited cosmetics can be provided as a bonus to users who frequently visit the company's website.

In the description of the fourth embodiment, the descriptive text or the promotional phrase of an item (product) differs depending on the purchase page. The state of display including images, in addition to texts, may differ depending on the purchase page. Images of an item may differ depending on the purchase page. For example, a background image of an item may differ, and the types of illustration, animation, or video for description of an item may differ.

In the description of the fourth embodiment, the page selecting unit 134 changes the probability of selecting each web page when a purchasing operation is performed. Alternatively, the page selecting unit 134 may change the probability of selecting each web page upon a predefined specific operation such as an input operation to an inquiry page, a call through a telephone interface, and zooming-in of an item image, instead of a purchasing operation.

**Claims**

1. A server comprising:

   a partial ID obtaining unit that obtains a partial ID being an ID assigned to a partial region selected by a user on a web page including a plurality of partial regions;
   a user characteristics managing unit that updates user characteristic information indicating interests of the user on the basis of the partial ID;
   a page building unit that changes a structure of a web page on the basis of the user characteristic information of the user to which the web page is to be provided; and
   a page transmitting unit that transmits the web page to a user terminal of the user.

2. The server according to claim 1, wherein the user characteristics managing unit refers to partial characteristic information associating each partial ID with one or more scores of one or more evaluation items to update the user characteristic information on the basis of the score or scores associated with the selected partial region.

3. The server according to claim 2, wherein

   the user characteristic information is information associating the user with scores of a plurality of evaluation items,
   the user characteristics managing unit refers to the partial characteristic information to update the scores in the user characteristic information on the basis of the scores associated with the selected partial region, and
   the page building unit changes the structure of the web page on the basis of a correlation degree between the scores in the user characteristic information and the scores associated with the partial region.

4. The server according to any one of claims 1 to 3, wherein

   reference information to another web page is set on a partial region;
   the user characteristics managing unit updates the user characteristic information when any one partial region on a first web page is selected by the user,
   the page transmitting unit transmits a second web page associated in advance with the partial region selected on the first web page to the user terminal, and
   the user characteristics managing unit further updates the user characteristic information when any one partial region on the second web page is further selected by the user.

5. The server according to any one of claims 1 to 4, wherein the page building unit changes arrangement of a plurality of partial regions included in a web page on the basis of the user characteristic information.

6. The server according to any one of claims 1 to 5, wherein a partial region is a string displayed to stand out as part of a text on the web page.

7. The server according to claim 1, wherein

the user characteristic information is formed as information indicating connection relations between a plurality of terms,

when a first partial region and a second partial region are selected, the user characteristics managing unit increases a connection degree between a first term associated with the first partial region and a second term associated with the second partial region in the user characteristic information, and

the page building unit changes structures of a plurality of partial regions included in a web page in accordance with the connection degrees between the terms indicated in the user characteristic information.

8. The server according to claim 1, wherein

scores of a plurality of evaluation items are associated with a limited page, the limited page being a predetermined web page,

the user characteristic information is information associating the user with scores of a plurality of evaluation items, and

when a correlation degree between the scores in the user characteristic information and the scores associated with the limited page is equal to or larger than a predetermined threshold, the page transmitting unit transmits the limited page to the user terminal.

9. A server,

wherein a plurality of web pages included in a first page group and a plurality of web pages included in a second page group each have a type set in advance,

the server comprises:

a page selecting unit that selects one of the web pages from the first page group in accordance with selection probabilities set for the respective web pages included in the first page group; and

a page transmitting unit that transmits the selected web page to a user terminal of a user, and

when a predetermined action is taken on the transmitted web page by the user, the page selecting unit increases the probability of selecting a web page included in the second page group, the web page being of the same type as the transmitted web page.

10. The server according to claim 9, wherein

each of the web pages included in the first page group is a web page for providing an opportunity to purchase a first product, and descriptions of the first product on the web pages of the first page group are different from each other,

each of the web pages included in the second page group is a web page for providing an opportunity to purchase a second product, and descriptions of the second product on the web pages of the second page group are different from each other, and

when an instruction to purchase the first product has been made by the user on a web page having been selected to be transmitted from the first page group, the page selecting unit increases the probability of selecting a web page in the second page group, the web page being of the same type as the transmitted web page.

11. A server comprising:

a partial ID obtaining unit that obtains a partial ID being an ID assigned to a partial region on a web page including the partial region when a user has selected the partial region;

a user characteristics managing unit that updates user characteristic information indicating interests of the user when the partial ID is obtained;

a page building unit that changes a structure of a web page on the basis of the user characteristic information of the user to which the web page is to be provided; and

a page transmitting unit that transmits the web page to a user terminal of the user.

12. A program for causing a computer to implement:

a function of obtaining a partial ID being an ID assigned to a partial region selected by a user on a web page including a plurality of partial regions;

a function of updating user characteristic information indicating interests of the user on the basis of the partial ID;
a function of changing a structure of a web page on the basis of the user characteristic information of the user to which the web page is to be provided; and
a function of transmitting the web page to a user terminal of the user.

13. A program,

wherein a plurality of web pages included in a first page group and a plurality of web pages included in a second page group each have a type set in advance,
the program causes a computer to implement:

a function of selecting one of the web pages from the first page group in accordance with selection probabilities set for the respective web pages included in the first page group; and
a function of transmitting the selected web page to a user terminal of a user; and
when a predetermined action is taken on the transmitted web page by the user, a function of increasing the probability of selecting a web page included in the second page group, the web page being of the same type as the transmitted web page.

# FIG. 1

SERVER ~100

204

202

200

# FIG. 2

COMMUNICATION UNIT  108                                              110

TRANSMITTING UNIT                          RECEIVING UNIT
112                                        114

PAGE                                       PARTIAL ID
TRANSMITTING UNIT                          OBTAINING UNIT

—102

DATA PROCESSING UNIT

130                    132                    134

USER
CHARACTERISTIC        PAGE BUILDING         PAGE SELECTING
MANAGING UNIT         UNIT                  UNIT

—104

DATA STORAGE UNIT

120                    122                    124

CONTENT               PARTIAL               USER
STORAGE UNIT          CHARACTERISTIC        CHARACTERISTIC
                      STORAGE UNIT          STORAGE UNIT

—106

SERVER

100

# FIG. 3

142

NEW ITEMS

144

REGULAR ITEMS

146

SALE ITEMS

148

LIMITED
TIME ITEMS

150

POINT ITEMS

152

REGULAR
PURCHASE ITEMS

140

FIG. 4

| LID | A1 (PRICE) | A2 (QUALITY) | A3 (NEWNESS) | A4 (LIMITED) | A5 (BONUS) |
|---|---|---|---|---|---|
| L01 (NEW ITEMS) | 1 | 3 | 5 | 4 | 2 |
| L02 (REGULAR ITEMS) | 4 | 3 | 1 | 1 | 3 |
| L03 (SALE ITEMS) | 5 | 4 | 4 | 4 | 4 |
| L04 (LIMITED TIME ITEMS) | 2 | 4 | 4 | 5 | 2 |
| L05 (POINT ITEMS) | 1 | 2 | 3 | 3 | 5 |
| L06 (REGULAR PURCHASE ITEMS) | 2 | 5 | 1 | 1 | 3 |

160

# FIG. 5

| PID | A1 (PRICE) | A2 (QUALITY) | A3 (NEWNESS) | A4 (LIMITED) | A5 (BONUS) |
|-----|-----------|--------------|--------------|--------------|------------|
| P01 | 6 | 7 | 4 | 3 | 1 |
| P02 | 4 | 2 | 1 | 3 | 6 |
| P03 | 7 | 9 | 4 | 2 | 0 |
| P04 | 1 | 0 | 2 | 4 | 1 |
| ⋮ | | | | | |

<u>170</u>

# FIG. 6

START

S10 — CALCULATE CORRELATION DEGREES

S12 — BUILD PAGE

S14 — TRANSMIT PAGE

END

# FIG. 7

① 146
SALE ITEMS

② 152
REGULAR PURCHASE ITEMS

③ 144
REGULAR ITEMS

④ 148
LIMITED TIME ITEMS

⑤ 142
NEW ITEMS

⑥ 150
POINT ITEMS

140

# FIG. 8

# FIG. 9

....

[Moisturizing] ingredients for dryness and [whitening] ingredients for blemishes.

Conventional [skincare] has been to supplement what the skin lacks.

For [beautiful skin] , we not only take the approach of "supplementing ingredients",

but also...

180

# FIG. 10

WHITENING
(15)

CREAM
(3)

LOTION
(10)

(2)

(1)

(8)

BEAUTIFUL SKIN ———————— (17) ———————— SKINCARE
(38)                                                        (20)

(12)          (5)                                (2)

MOISTURIZING      CARE                              MASK
(36)              (6)                               (8)

# FIG. 11

```
        ┌──────────┐
        │  START   │
        └────┬─────┘
             │
  ┌──────────┴──────────────┐
S20│ ADD TO IMPORTANCE DEGREE │
  └──────────┬──────────────┘
             │
        S22 ◇ SECOND OR              N
          SUBSEQUENT  ──────────┐
           SELECTION?            │
             │ Y                 │
  ┌──────────┴──────────────┐    │
S24│ ADD TO CONNECTION DEGREE │    │
  └──────────┬──────────────┘    │
             │◄─────────────────┘
        ┌────┴─────┐
        │   END    │
        └──────────┘
```

# FIG. 12

146
SALE ITEMS

152
REGULAR PURCHASE ITEMS

144
REGULAR ITEMS

148
LIMITED TIME ITEMS

142
NEW ITEMS

150
POINT ITEMS

192

LOTION: FACIAL LINK

LIMITED TO 95 PIECES LEFT

140

# FIG. 13

```
                    ┌─────────┐
                    │  START  │
                    └─────────┘
                         │
                         ▼
S30              ╱───────────────╲
              ╱   CORRELATION      ╲        N
             ╱    DEGREE ≥ V?       ╲──────────┐
              ╲                    ╱           │
               ╲──────────────────╱           │
                         │ Y                   │
                         ▼                     │
S32              ╱───────────────╲             │
              ╱                    ╲     N      │
             ╱    REMAINING?        ╲──────────▶│
              ╲                    ╱            │
               ╲──────────────────╱            │
                         │ Y                    │
                         ▼                      │
S34      ┌──────────────────────────┐          │
         │   DISPLAY LINK TO         │          │
         │   LIMITED ITEM PAGE       │          │
         └──────────────────────────┘          │
                         │◀────────────────────┘
                         ▼
                    ┌─────────┐
                    │   END   │
                    └─────────┘
```

# FIG. 14

WA1
"IT WILL SAVE YOU MONEY"          30%

COSMETICS A — WA2
"JUST FOR NOW"          20%

WA3
"JUST FOR YOU"          50%

PURCHASE

WB1
"IT WILL SAVE YOU MONEY"          35% →(+10) 45%

COSMETICS B — WB2
"JUST FOR NOW"          25% →(−5) 20%

WB3
"JUST FOR YOU"          40% →(−5) 35%

| INTERNATIONAL SEARCH REPORT | | International application No. |
|---|---|---|
| | | **PCT/JP2022/011932** |

**A.    CLASSIFICATION OF SUBJECT MATTER**

*H04L 67/02*(2022.01)i; *G06Q 30/02*(2012.01)i
FI:    H04L67/02; G06Q30/02 398

According to International Patent Classification (IPC) or to both national classification and IPC

**B.    FIELDS SEARCHED**

Minimum documentation searched (classification system followed by classification symbols)

H04L67/02; G06Q30/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-248119 A (FUJITSU LTD) 13 December 2012 (2012-12-13) paragraphs [0014]-[0073] | 1, 4-5, 11-12 |
| A | paragraphs [0014]-[0073] | 2-3, 6-10, 13 |
| A | JP 2013-546086 A (ALCATEL LUCENT) 26 December 2013 (2013-12-26) entire text, all drawings | 1-13 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 April 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/011932**

| Patent document cited in search report | | | Publication date (day/month/year) | Patent family member(s) | | | Publication date (day/month/year) |
|---|---|---|---|---|---|---|---|
| JP | 2012-248119 | A | 13 December 2012 | US | 2012/0311140 | A1 | |
| | | | | paragraphs [0031]-[0096] | | | |
| JP | 2013-546086 | A | 26 December 2013 | US | 2012/0137201 | A1 | |
| | | | | entire text, all drawings | | | |
| | | | | WO | 2012/074661 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 6205700 B